# EUROPÄISCHE PATENTSCHRIFT

(11) **EP 3 206 851 B1**
(45) Veröffentlichungstag und Bekanntmachung des Hinweises auf die Patenterteilung: **23.03.2022**
(21) Anmeldenummer: 15790474.9
(22) Anmeldetag: 13.10.2015
(51) Int. Cl.: B29C 45/74, F25B 29/00, F25B 40/00, F25B 25/00, B29C 49/48, F25D 17/02

(54) **TEMPERIERGERÄT**
TEMPERATURE-CONTROL DEVICE
APPAREIL DE MISE EN TEMPÉRATURE

(30) Priorität: 13.10.2014 DE 202014104867 U
(43) Veröffentlichungstag der Anmeldung: 23.08.2017
(73) Patentinhaber: Autenrieth, Steffen, 72535 Heroldstatt (DE); Uitz, Karsten, 88239 Wangen im Allgäu (DE)
(72) Erfinder: Autenrieth, Steffen, 72535 Heroldstatt (DE); Uitz, Karsten, 88239 Wangen im Allgäu (DE)
(74) Vertreter: Molnia, David
(86) Internationale Anmeldenummer: PCT/EP2015/073666
(87) Internationale Veröffentlichungsnummer: WO 2016/059044

(56) Entgegenhaltungen:
- EP-A1- 2 140 999
- WO-A1-2013/088357
- DE-A1-102007 021 420
- GB-A- 572 425
- GB-A- 928 536
- JP-A- 2004 132 588
- US-A- 3 194 868
- US-A- 3 391 314
- US-A- 4 541 792
- US-A- 5 491 982
- US-A- 6 148 626
- US-A1- 2005 150 635

## Beschreibung

Die vorliegende Erfindung betrifft ein Temperiergerät zur Einstellung der Temperatur eines Arbeitsmediums.

Aus der WO 2013/088357 A1 werden Unter-Kreisläufe eines Hauptkreises in einem Wärmepumpenkreis verwendet, die mit unterschiedlichen Arbeitsmedien betrieben werden. In der US 4,541,792 A wird ein Temperatursteuerungssystem mit zwei Kreisläufen beschrieben. In der US 6,148,626 A ist eine Kühlvorrichtung beschrieben. In der GB 572 425 A ist ein Verfahren zur Gießen von Duroplasten beschrieben. In der GB 928,536 A wird eine Vorrichtung zum Kühlen thermisch geformter thermoplastischer Platten beschrieben. In der US 3,391,314 A wird ein Verfahren zum Behandeln eines Kunststofffilms beschrieben. DE 10 2006 004917 A1 Beschreibt ein Temperiergerät gemäß dem Stand der Technik.

Bei Werkzeugen oder Maschinen insbesondere für die Kunststoffverarbeitung ist die exakte Temperaturführung oder das Temperaturmanagement von besonderer Bedeutung. Insbesondere werden steile Temperaturrampen und enge Toleranzgrenzen gefordert. Aus diesem Grund ist es erforderlich Temperiergeräte bereit zu stellen, die den steigenden Prozesspotentialen und Prozessanforderungen gerecht werden können. Zudem sollen die Temperaturverläufe idealer Weise sowohl mit präziser Dynamik sowie ökonomisch umsetzbar sein.

Das Temperiergerät hat hierbei unmittelbar Einfluss auf einige wichtige Faktoren des Kunststoffverarbeitungsprozesses. Beispielsweise wirkt sich die durch das Temperiergerät einstellbare Temperatur des Arbeitsmediums auf die Formteilgenauigkeit und Verzug sowie auf einige Eigenschaften des Werkstücks aus. Zudem wird durch ein Temperiergerät aber auch der Energieverbrauch des gesamten Herstellungsprozesses beeinflusst.

Bei bekannten Temperiergeräten, bei denen der Wärmeeintrag in das Arbeitsmedium durch elektrisch betriebene Heizelemente, wie beispielswiese Heizstäbe erfolgt, ist zum einen eine schnelle Anpassung der Temperatur des Arbeitsmediums nicht möglich und zum anderen ist der zur Erzeugung der Wärme erforderliche Energieaufwand erheblich.

Es sollte damit eine hochdynamische, exakte und gleichzeitig energieeffiziente Temperierung bereitgestellt werden.

Aufgabe der vorliegenden Erfindung ist es somit ein Temperiergerät zu entwickeln, das Temperaturvorgaben über einen weiten Temperaturbereich schnell und präzise mit einem geringen Energiebedarf umsetzt.

Der Erfindung liegt die Erkenntnis zugrunde, dass diese Aufgabe durch Verwendung von Wärmepumpentechnologien gelöst werden kann.

Erfindungsgemäß wird die Aufgabe daher durch ein Temperiergerät gemäss Anspruch 1 gelöst.

Als Temperiergerät oder Temperiervorrichtung wird hierbei ein Gerät bezeichnet, mittels dessen die Temperatur eines Arbeitsmediums in einem Arbeitskreislauf beeinflusst werden kann. Als Temperiergerät wird hierbei insbesondere ein Gerät zum Erwärmen oder Kühlen des Arbeitsmediums bezeichnet. Das Arbeitsmedium kann erfindungsgemäß flüssig oder gasförmig sein. Vorzugsweise wird das Arbeitsmedium in einem Arbeitskreislauf, der auch als Arbeitskreis bezeichnet wird, geführt, der beispielsweise durch Rohre oder Schläuche realisiert sein kann. In dem Arbeitskreis wird das temperierte Arbeitsmedium zu dem Wirkungsort, beispielsweise in ein Werkzeug geführt, um dort das Werkstück zu Erwärmen oder dieses zu Kühlen.

Erfindungsgemäß ist mindestens eine Wärmepumpe in dem Temperiergerät enthalten. Die Wärmepumpe ist vorzugsweise in dem Gehäuse des Temperiergerätes aufgenommen. Eine Wärmepumpe bezeichnet im Sinne der Erfindung eine Vorrichtung mittels derer unter Zufuhr von Arbeit die Temperatur eines Mediums, das im Folgenden auch als Wärmepumpmedium bezeichnet wird, von einem vorgegebenen Temperaturniveau auf ein höheres Temperaturniveau angehoben wird. Das Verhältnis von nutzbarer Wärmeleistung zu zugeführter, zum Beispiel elektrischer Leistung wird als Leistungszahl oder als COP "Coefficient Of Performance" bezeichnet.

Die Wärmepumpe kann erfindungsgemäß einen oder mehrere Wärmepumpenkreise aufweisen. Die Wärmepumpenkreise umfassen hierbei jeweils mindestens drei Wärmetauscher, wobei einer der Wärmetauscher als Verdampferwärmetauscher und einer Wärmetauscher als Kondensatwärmetauscher ausgestaltet sein kann. Das Arbeitsmedium kann flüssig oder gasförmig sein. Darüber hinaus kann ein zusätzlicher Wärmetauscher vorgesehen werden, welcher im Gegenstrom das verdampfte, zu verdichtende Medium erhitzt, wobei gleichzeitig das aus einem der Wärmetauscher zurückströmende Medium vor der Verdampfung abgekühlt wird. Auch durch diese Maßnahme lässt sich der Wirkungsgrad der Wärmepumpe weiter verbessern.

In der Wärmepumpe ist erfindungsgemäß zudem mindestens eine Verdichtereinheit vorgesehen, die auch als Verdichter bezeichnet werden kann. In dem Verdichter wird verdampftes Wärmepumpenkreismedium verdichtet.

Sind mehrere Wärmepumpenkreise vorgesehen, so sind diese vorzugsweise jeweils mit der gleichen Struktur aufgebaut.

Durch die Verwendung von wenigstens einer Wärmepumpe lässt sich der COP-Wert erheblich steigern. Bei Verwendung von mehr als einem Wärmepumpenkreis verbessert sich der COP-Wert weiter, da der Arbeitsaufwand bei der Verdichtung von Wärmepumpenkreismedium für beide Kreise weniger als die Hälfte des Arbeitsaufwands bei einer einkreisigen Wärmepumpe ist, unter der Voraussetzung gleicher Temperaturniveaus.

Insbesondere in der Kunststoffverarbeitung sind die Anforderungen wegen der alternierenden Temperaturanforderungen besonders schwierig zu erfüllen. So muss für die Einspritzung, den Nachdruck und das Entformen jeweils ein geeignetes Temperaturprofil an dem Werkzeug eingestellt werden.

Durch Verwendung einer Wärmepumpe in dem Temperiergerät wird es möglich stets die ideale Temperatur einzustellen, die anwendungsbedingt auch sehr hohe und sehr niedrige Temperaturen einschließen können. Dennoch kann durch die Verwendung einer Wärmepumpe der Gesamtenergiebedarf erheblich gesenkt werden.

Erfindungsgemäß wird zumindest ein Teil der Heizleistung und/oder der Kühlleistung über die mindestens eine Wärmepumpe in dem Temperiergerät bereitgestellt. Hierdurch lässt sich der Energiebedarf auf einen Bruchteil des bisher notwendigen Energiebedarfs senken. Zudem kann gleichzeitig eine sichere und auch jahreszeitunabhängige Kühlung realisiert werden.

Im Gegensatz zum Stand der Technik, bei dem die Heizleistung durch elektrische Heizelemente, insbesondere Heizstäbe bereitgestellt wird, kann mit der erfindungsgemäßen Verwendung einer Wärmepumpe je nach Leistungszahl auf die Hälfte oder ein Viertel der gepumpten Energiemenge gesenkt werden. Bei der Verwendung von elektrischen Heizelementen hingegen ist ein der Heizleitung identischer Energiebedarf notwendig. Mit dem erfindungsgemäßen Temperiergerät kann somit beispielweise eine Heizleistung von 8kW mit nur 2 bis 4 kW elektrischer Leistung bereitgestellt werden.

Mit dem erfindungsgemäßen Temperiergerät können Temperaturen bis zu 140°C erzielt werden. Insbesondere können Temperaturen beispielsweise in einem Bereich von 15 bis 140°C oder in einem Bereich von 40 bis 90°C mit dem erfindungsgemäßen Temperiergerät eingestellt werden.

Die erforderliche Heizleistung kann bei dem erfindungsgemäßen Temperiergerät beispielsweise 9, 18 oder 36 kW betragen und die Kühlleistung beispielsweise 30, 60 oder 100kW.

Mit dem erfindungsgemäßen Temperiergerät können Temperierleistungen im Verhältnis zu der aufgewendeten Leistung, ausgedrückt durch den Coefficient Of Performance (COP) von 2 bis 4 erreicht werden.

Gemäß einer bevorzugten Ausführungsform weist das Temperiergerät zumindest einen Anschluss für einen Arbeitskreis, der auch als Arbeitskreislauf bezeichnet wird, und zumindest einen Anschluss für einen Quellkreis, der auch als Quellkreislauf bezeichnet wird, auf. Vorzugsweise weist das Temperiergerät jeweils zwei Anschlüsse für den Arbeitskreislauf und zwei Anschlüsse für den Quellkreislauf auf.

Als Arbeitskreis wird der Kreislauf bezeichnet, in dem das Arbeitsmedium, das durch das Temperiergerät bezüglich seiner Temperatur beeinflusst werden soll, geführt ist. Der Arbeitskreislauf umfasst daher zumindest einen Teil, der in einem Werkzeug oder einer anderen Vorrichtung, in der das Arbeitsmedium zum Temperieren von Gegenständen, insbesondere Werkstücken verwendet werden kann, geführten wird. Als Quellkreis wird eine Führung von Quellmedium bezeichnet, durch die auf ein Medium, das zur Beeinflussung der Temperatur des Arbeitsmediums verwendet wird, Einfluss genommen werden kann, insbesondere dessen Temperatur geändert werden kann. Das Medium zur Beeinflussung der Temperatur des Arbeitsmediums kann ein Wärmepumpenmedium sein. Alternativ oder zusätzlich kann das Quellmedium auch unmittelbar zur Beeinflussung der Temperatur des Arbeitsmediums verwendet werden.

Sowohl der Arbeitskreis als auch der Quellkreis führen erfindungsgemäß vorzugsweise ein Fluid oder Gas, insbesondere Wasser oder Luft.

Vorzugsweise weist das erfindungsgemäße Temperiergerät zwei Anschlüsse für den Arbeitskreis und zwei Anschlüsse für den Quellkreis auf, wobei jeweils einer der Anschlüsse ein Zulauf und einer ein Ablauf ist. Insbesondere bezüglich des Quellkreises können aber auch mehr Anschlüsse vorgesehen sein. So können beispielsweise pro Wärmequelle oder Kältequelle jeweils zwei Anschlüsse vorgesehen sein.

Da bei dem erfindungsgemäßen Temperiergerät mindestens eine Wärmepumpe vorgesehen ist, können der Arbeitskreis und der Quellkreis über die Wärmepumpe(n) das heißt die jeweiligen Wärmepumpenkreise miteinander verbunden - insbesondere über Wärmetauscher - werden. Insbesondere kann der Arbeitskreis mit dem Quellkreis über die Wärmepumpe so verbunden werden, dass Wärme aus dem Arbeitskreis entzogen oder diesem zugeführt werden kann.

Gemäß einer Ausführungsform stellt der mindestens eine Anschluss für den Quellkreis einen Anschluss an ein bauseitiges Netz, ein Reservoir oder einen Anschluss an die Umgebung dar.

Als bauseitiges Netz wird hierbei beispielsweise eine Kaltwasserleitung des Gebäudes, in dem das Temperiergerät betrieben wird, bezeichnet. Erfindungsgemäß kann hierbei die Kaltwasserleitung als Wärmequelle für die Wärmepumpe(n) verwendet werden. Indem dem bauseitigen Netz Wärme entzogen wird, wird das Quellmedium gekühlt. Hierdurch ergibt sich eine weitere Energieeinsparung. Insbesondere wird normalerweise in einem bauseitigen Netz Kühlmaschine entlastet und damit der Stromverbrach dieser zentralen Kühlmaschine reduziert. Zudem kann die aus der Kaltwasserleitung entzogene Wärme für die Wärmepumpe verwendet werden und beispielsweise zum Erwärmen eines Werkzeuges zur Verfügung gestellt werden.

Ein Reservoir zu dem ein Anschluss an dem Temperiergerät vorgesehen ist, kann beispielsweise ein zentraler Wärmespeicher oder Kältespeicher sein, der in dem Gebäude, in dem das Temperiergerät betrieben wird, vorgesehen ist.

Der Anschluss an die Umgebung kann beispielsweise ein Lüfter sein. Durch einen solchen Lüfter oder den Anschluss von einem solchem Lüfter kann insbesondere die Wärme aus der Umgebung, beispielsweise einer Halle, in das Temperiergerät und insbesondere in den Quellkreis eingebracht werden. Diese Wärme kann in dem Temperiergerät zur Erwärmung des Arbeitsmediums unmittelbar oder über die Wärmepumpe des Temperiergerätes verwendet werden. Bei der Verwendung von Umgebungsluft als Wärmequelle ist vorzugsweise bei dem erfindungsgemäßen Temperiergerät zusätzlich oder alternativ zu einem Lüfter ein Wärmetauscher vorgesehen, der beispielsweise einen Lamellen- oder Rohrwärmetauscher darstellen kann. Dieser Wärmetauscher dient hierbei zum Übertragen der Wärme aus dem Quellkreis in den Arbeitskreis und/oder in den Wärmepumpkreis.

Die derzeit zum Heizen eingesetzten elektrischen Heizmittel haben den Nachteil eines hohen Stromverbrauchs und durch den Eintrag der Heizleistung in die Produktionshalle einer weiteren Aufheizung der Halle, die eine Klimatisierung notwendig macht.

Dies ist insbesondere in einem Spritzgussbetrieb, insbesondere einem Kunststoffspritzgussbetrieb nachteilig, da dort in einer Halle häufig mehr als 100 Temperiergeräte benötigt werden. Somit ist der Vorteil, dass die Wärme aus der Umgebung bei dem erfindungsgemäßen Temperiergerät zur Erwärmung des Arbeitsmediums verwendet werden kann, von besonderer Bedeutung.

Gemäß einer bevorzugten Ausführungsform weist das Temperiergerät mindestens zwei Wärmetauscher auf, die in mindestens einem Kreislauf in Reihe geschaltet sind. Die Wärmetauscher können in Form eines Gegenstromwärmetauschers, eines Verdampfers oder Kondensators ausgeführt sein. Der Kreis in dem zumindest zwei Wärmetauscher in Reihe vorgesehen sind, ist vorzugsweise mindestens einer der Wärmepumpenkreise. Sind mehrere Wärmepumpenkreise vorgesehen, können zusätzlich oder alternativ auch zwei Wärmetauscher unterschiedlicher Wärmepumpenkreise in Reihe geschaltet sein.

Gemäß einer Ausführungsform sind in dem Quellkreis in dem Temperiergerät zumindest zwei Wärmetauscher in Reihe vorgesehen. Bei dieser Ausführungsform kann der in Strömungsrichtung des Quellmediums erste Wärmtauscher beispielsweise der unmittelbaren Entziehung oder Übertragung von Wärme in oder aus dem Arbeitskreis dienen. Über den zweiten Wärmetauscher, der in Strömungsrichtung nach dem ersten Wärmetauscher in dem Quellkreis vorgesehen ist, wird erfindungsgemäß ein weiterer Betrag von Wärme in einen Wärmepumpkreis übertragen oder aus diesem entzogen.

Erfindungsgemäß sind in dem Wärmepumpenkreis in dem Temperiergerät zumindest zwei Wärmetauscher in Reihe vorgesehen. Hierbei kann einer der Wärmetauscher dem Austausch von Wärme mit dem Quellkreis und der weitere Wärmtauscher dem Austausch von Wärme mit dem Quellkreis dienen. Erfindungsgemäß sind in dem Wärmepumpenkreis drei Wärmtauscher vorgesehen, wobei der dritte Wärmetauscher zur Übertragung von Wärme zwischen unterschiedlichen Zweigen des Wärmepumpenkreises dient.

Sind zwei Wärmepumpenkreise vorgesehen, sind vorzugsweise die Eingangswärmetauscher des ersten und zweiten Wärmepumpenkreises primärseitig und die Ausgangswärmetauscher des ersten und zweiten Wärmepumpenkreises sekundärseitig jeweils in Reihe geschaltet. Durch das Vorsehen von zumindest zwei zueinander in Reihe geschalteten Wärmetauschern in zumindest einem der Mediumkreise des Temperiergerätes kann die Effizienz des Temperiergerätes gesteigert werden. Insbesondere kann bei dem Vorsehen zweier Wärmetauscher in Reihe geschaltet bei mehreren Wärmepumpenkreisen für alle Kreise auf die Hälfte des Arbeitsaufwandes bei der Verwendung von nur einem Wärmepumpenkreis erzielt werden. Zudem kann auch bei Verwendung von nur einem Wärmepumpenkreis bei der Vorsehung zweier Wärmetauscher in dem Quellkreis eine Übertragung der thermischen Energie zwischen dem Quellkreis und dem Arbeitskreis sowie zwischen dem Quellkreis und dem Wärmepumpenkreis realisiert werden. Wird als Medium für den Quellkreis beispielsweise Kaltwasser aus verwendet, kann somit zunächst das Medium des Arbeitskreises gekühlt und anschließend das Medium des Wärmepumpenkreises gekühlt werden.

Gemäß einer bevorzugten Ausführungsform ist mindestens eine der Wärmepumpen zum Kühlen des Arbeitsmediums ausgelegt. Hierbei können zum Kühlen und Erwärmen des Arbeitsmediums zwei separate Wärmepumpen oder zumindest zwei separate Wärmepumpenkreise in einer Wärmepumpe vorgesehen sein. Alternativ ist es allerdings auch möglich eine einzige Wärmepumpe, insbesondere einen einzigen Wärmepumpenkreis sowohl zum Kühlen als auch zum Erwärmen des Arbeitsmediums zu verwenden. Hierbei kann in dem Wärmepumpenkreis beispielsweise ein Vierwegeventil eingesetzt werden, durch den in dem Wärmepumpenkreis zwischen einem Kühlen und einem Erwärmen des Arbeitsmediums umgeschaltet werden kann. Zusätzlich oder alternativ zu der Wärmepumpe kann ein Kühlen oder Erwärmen des Arbeitsmediums auch durch einen Wärmetauscher erfolgen, der den Arbeitskreis mit dem Quellkreis verbindet und vorzugsweise als Gegensstromwärmetauscher ausgebildet ist.

Indem bei dem erfindungsgemäßen Temperiergerät vorzugsweise ein Kühlen und Erwärmen des Arbeitsmediums in dem Temperiergerät möglich ist, kann auch die Steuerung des Gesamtprozesses in der Kunststoffverarbeitung, beispielsweise beim Spritzgießen vereinfacht werden.

Bei der Kühlung durch das Temperiergerät kann beispielsweise eine gleitende Kondensationsdruckregelung verwendet werden. Um die notwendige Verflüssigungstemperatur der Wärmepumpenkreistemperatur nachregeln zu können, wird vorzugsweise die Kombination aus Verdichtern, Verflüssigern, Kältemittel, Expansionsventilen und Steuerung in dem Temperiergerät verwendet.

Im Stand der Technik wird für die Kühlung entweder Leitungswasser, das heißt Trinkwasser im Durchfluss verwendet oder es werden geschlossene Kreisläufe mit einem Kühlwasserreservoir eingesetzt. Beide Varianten haben den Nachteil, dass diese jahreszeitabhängig beziehungsweise umgebungstemperaturabhängig sind. Bei einem Kühlwasserreservoir werden im Sommer beispielsweise Temperaturen von über 40°C erreicht, wodurch eine optimale Kühlung insbesondere in Phasen hoher Produktionsauslastung schwierig ist.

Gemäß einer Ausführungsform weist das Temperiergerät einen Wärmespeicher und/oder einen Kältespeicher auf. Hierdurch kann eine zuverlässige Temperierung des Arbeitsmaterials beziehungsweise des Werkstücks besonders gut sichergestellt werden. Der oder die Wärme- und/oder Kältespeicher können hierbei jeweils während des anderen Behandlungsvorgangs gefüllt werden. So kann beispielsweise die während eines Kühlvorgangs aus einem Arbeitsmedium entzogene Wärme dem Wärmespeicher zugeführt werden und in einem folgenden Erwärmungsvorgang zum Erwärmen des Arbeitsmediums verwendet werden.

Für die Verwendung des Kühlwasserrücklaufs eines Werkzeuges als Wärmequelle für das Temperiergerät kann beispielsweise ein Zwischenspeicher vorgesehen sein. Dieser erlaubt, dass das Kühlen und Erwärmen in dem Temperierprozess zeitlich versetzt erfolgt.

Durch Integration eines Kälte- und eines Wärmespeichers in das Temperiergerät können wechselnde Temperierungserfordernisse durch Rückgriff auf diese Reservoire realisiert werden. So ergibt sich ein weitgehend autarkes System. Der erforderliche Energieaufwand ist lediglich für das Verschieben oder Pumpen von Wärmepotentialen erforderlich. Somit ist der Energieaufwand insbesondere gegenüber dem Stand der Technik, bei dem das Erwärmen und Kühlen je nach wechselndem Bedarf immer erneut unter Resourcenaufwand, wie Energie und Wasser erfolgen muss, verringert.

Vorzugsweise stellt das Temperiergerät ein mobiles Gerät dar. Als mobiles Gerät wird hierbei ein Gerät verstanden, dass an unterschiedlichen Einsatzorten angeschlossen werden kann. Das Temperiergerät kann beispielsweise ein fahrbares Temperiergerät darstellen, das je nach Bedarf zu einem Werkzeug gebracht und an dieses angeschlossen werden kann.

Vorzugsweise stellt der mindestens eine Anschluss für den Arbeitskreis einen Anschluss an einen Werkzeugkühlkreis, insbesondere einen Kunststoffverarbeitungswerkzeugkühlkreis dar. Insbesondere in der Kunststoffverarbeitung können die Vorteile des erfindungsgemäßen Temperiergerätes besonders gut genutzt werden. Beispielsweise ist es beim Spritzguss mit Kunststoff notwendig, rasch konkrete Temperaturprofile in dem Werkzeug einstellen zu können. Indem bei dem erfindungsgemäßen Temperiergerät mindestens einen Wärmepumpe zum Temperieren des Arbeitsmediums verwendet wird, kann dies mit geringem Energieaufwand rasch erfolgen.

Das Medium des Quellkreises kann ein flüssiges oder gasförmiges Medium darstellen. Als flüssiges Medium kann beispielsweise zum Kühlen Kaltwasser aus einem Hausnetz als Quellmedium verwendet werden. Als gasförmiges Medium kann beispielsweise zum Erwärmen die Umgebungsluft verwendet werden. Da in den Räumen oder Hallen, in denen das Temperiergerät eingesetzt wird, in der Regel eine höhere Temperatur vorliegt, kann die Umgebungsluft als Quellmedium für das Temperiergerät verwendet werden und hierbei gleichzeitig die Hallenluft gekühlt werden. Dadurch wird die Abwärmemenge reduziert. Bei Temperiergeräten nach dem Stand der Technik wird diese Abwärme in die Werkshalle abgegeben und muss durch Hallenklimatisierung abgeführt werden, die einen weiteren Energieaufwand erfordert.

Bei dem erfindungsgemäßen Temperiergerät hingegen kann der Hallenaufwärmung aktiv entgegengewirkt werden, indem zumindest zeitweise die Umluft in der Halle und damit deren Wärme als Wärmequelle für die Wärmepumpe verwendet werden.

Für die Verwendung der Umgebungsluft als Wärmequelle für zumindest einen Kreislauf des Temperiergerätes kann ein Lüfter verwendet werden, in dem gegebenenfalls zusätzlich ein Filter vorgesehen ist. Der Lüfter kann erfindungsgemäß in dem Temperiergerät integriert sein.

Mit dem erfindungsgemäßen Temperiergerät ist es möglich die Durchflussmengen der Wärmeträger in den unterschiedlichen Kreisläufen so einzustellen, dass die Pumpleistungen möglichst weitgehend minimiert werden. Zudem ist es mit dem erfindungsgemäßen Temperiergerät möglich unterschiedliche Wärmequellen und Wärmesenken zu verwenden. Beispielsweise kann der Rücklauf des Kühlkreislaufes eines Werkzeuges, der den Arbeitskreislauf darstellt, gleichzeitig als Wärmequelle für einen oder mehrere der weiteren Kreisläufe dienen. Alternativ oder zusätzlich kann die Umgebungsluft des Temperiergerätes oder ein zentraler Abwärmespeicher als Wärmequelle dienen.

Parameter, die an dem erfindungsgemäßen Temperiergerät eingestellt werden können, sind beispielsweise die Durchlaufmenge und die Vorlauftemperatur in den einzelnen Kreisläufen. Hierdurch kann die zu überwindende Temperaturdifferenz auf einem Minimum gehalten werden.

Die Temperiergeräte können nach den Anforderungen im Nutzungskreis ausgelegt sein. Gemäß einer Ausführungsform weist das Temperiergerät eine Heizleistung von 9kW und eine Kühlleistung von 30kW auf. Bei dieser Ausführungsform kann beispielsweise die Hallenluft als Wärmequelle verwendet werden. Gemäß einer weiteren Ausführungsform weist das Temperiergerät eine Heizleistung von 18kW und eine Kühlleistung von 60kW auf. Bei dieser Ausführungsform kann beispielsweise die Hallenluft oder ein zentrales Reservoir als Wärmequelle verwendet werden. Gemäß einer weiteren Ausführungsform weist das Temperiergerät eine Heizleistung von 36kW und eine Kühlleistung von 100kW auf. Bei dieser Ausführungsform kann beispielsweise die Hallenluft, ein zentrales Reservoir oder interne Tanks in dem Temperiergerät als Wärmequelle verwendet werden.

Mit dem erfindungsgemäßen Temperiergerät können Temperaturverläufe mit hochpräziser Dynamik energieeffizient realisiert werden.

Die Erfindung wird im Folgenden erneut unter Bezugnahme auf die beiliegenden Figuren beschrieben. Es zeigen:
Figur 1: eine schematische Blockdarstellung einer Ausführungsform eines erfindungsgemäßen Temperiergerätes; und
Figur 2: eine schematische Blockdarstellung einer weiteren Ausführungsform eines erfindungsgemäßen Temperiergerätes.

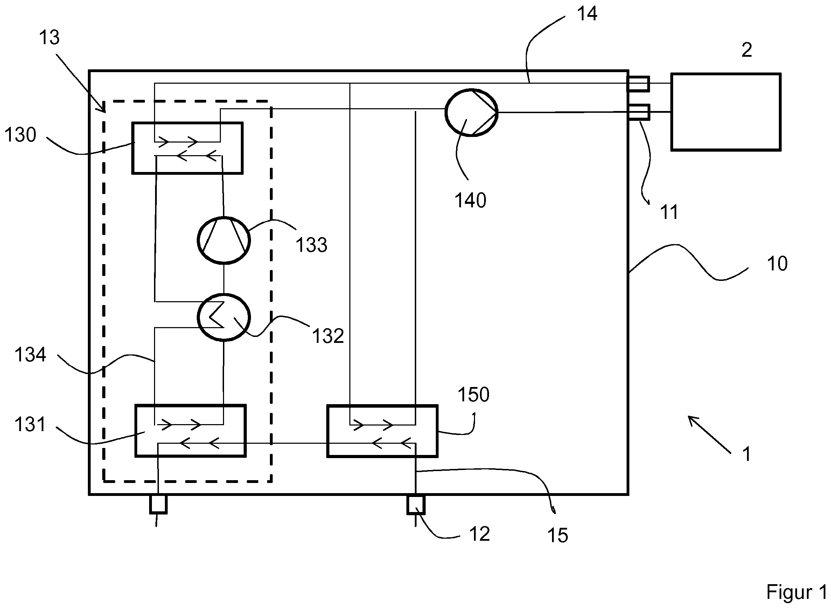

In Figur 1 ist eine Ausführungsform eines erfindungsgemäßen Temperiergerätes 1 schematisch gezeigt. Hierbei sind nur die wesentlichen Bestandteile der einzelnen Komponenten angedeutet. Das Temperiergerät 1 weist in der dargestellten Ausführungsform ein Gehäuse 10 auf, in dem zumindest ein Teil der Kreisläufe geführt ist. Das Temperiergerät 1 weist in der dargestellten Ausführungsform zwei Anschlüsse 11 zum Anschluss an einen Arbeitskreis 14 auf, der auch als Nutzkreis oder Arbeitskreislauf bezeichnet werden kann. In der dargestellten Ausführungsform erstreckt sich der Arbeitskreis 14 über die Anschlüsse 11 zu einem Werkzeug 2, das insbesondere ein Spritzgusswerkzeug darstellen kann. Der Arbeitskreis 14 stellt dabei den Kühlkreis oder Kühlkreislauf des Werkzeuges 2 dar oder ist an diesen angebunden. Der Kühlkreis des Werkzeuges 2 umfasst insbesondere Kanäle oder Rohre (nicht gezeigt) mittels derer das Arbeitsmedium in dem Kühlkreis in die Nähe der Oberfläche des Werkstücks gebracht werden kann. Im Folgenden wird im Wesentlichen auf den Teil des Arbeitskreises 14, der in dem Temperiergerät 1 verläuft, Bezug genommen und dieser Teil als Arbeitskreis 14 bezeichnet. Der Arbeitskreis 14 insgesamt stellt vorzugsweise einen geschlossenen Kreislauf dar. In dem Temperiergerät 14 ist in dem Arbeitskreis 14 eine Pumpe 140 vorgesehen, mittels derer das Arbeitsmedium in dem Arbeitskreis 14 befördert werden kann. Weiterhin umfasst das Temperiergerät 1 einen Quellkreis 12, der in der dargestellten Ausführungsform über zwei Anschlüsse 12 mit einem bauseitigen Netz (nicht dargestellt) verbunden werden kann. Als Quellkreis 12 wird im Folgenden im Wesentlichen der Teil des Quellkreises 12 bezeichnet, der in dem Temperiergerät 1 verläuft. Bei dem Quellkreis 12 insgesamt kann es sich um einen offenen Kreislauf, beispielsweise eine Kaltwasserleitung (nicht dargestellt) handeln.

Schließlich umfasst das Temperiergerät 1 eine Wärmepumpe 13. Der Wärmepumpenkreis, der in der Wärmepumpe 13 verläuft, ist in der Figur mit 134 bezeichnet. In der Wärmepumpe 13 sind ein erster Wärmetauscher 130 und ein zweiter Wärmetauscher 131 vorgesehen. Weiterhin sind in der Wärmepumpe 13 ein weiterer Wärmetauscher 132 und ein Verdichter 133 vorgesehen. Die Wärmepumpe 13 umfasst vorzugsweise weitere Elemente, wie Schauglas, Filter, Ventile, wie Expansionsventil und Einspritzventil die in der Figur 1 nicht gezeigt sind.

Zusätzlich ist in der in Figur 1 gezeigten Ausführungsform ein weiterer Wärmetauscher 150 vorgesehen, über den ein Wärmeaustausch unmittelbar zwischen dem Arbeitskreis 14 und dem Quellkreis 15 erfolgen kann.

Die Wärmetauscher 150 und 131 sind in dem Quellkreis 15 in Reihe geschaltet. Auch die Wärmetauscher 130 und 131 sowie der weitere Wärmetauscher 132 sind in dem Wärmepumpenkreis 134 in Reihe geschaltet.

Wird in dem Werkzeug 2 eine Temperaturerhöhung für die Prozessführung notwendig, so kann mit dem Temperiergerät 1 das Arbeitsmedium in dem Arbeitskreis 14 erwärmt werden. Hierzu wird erfindungsgemäss über den Wärmetauscher 130 Wärme, die in der Wärmepumpe 13 und in dem Wärmepumpkreis 134 erzeugt wurde, an das Arbeitsmedium in dem Arbeitskreis 14 übertragen. Zum Kühlen kann bei der in Figur 1 gezeigten Ausführungsform der Arbeitskreis 14 über den zusätzlichen Wärmetauscher 150 geführt werden und dort mittels Kühlmittel, wie beispielsweise Kaltwasser gekühlt werden.

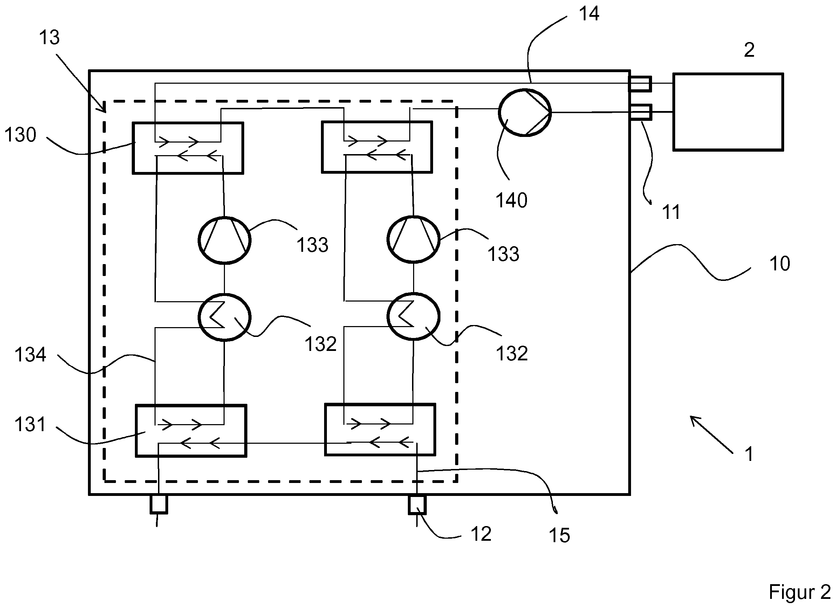

In Figur 2 ist eine weitere Ausführungsform des erfindungsgemäßen Temperiergerätes 1 gezeigt. Diese zweite Ausführungsform unterscheidet sich von der in Figur 1 gezeigten Ausführungsform dadurch, dass in der Wärmepumpe 13 zwei Wärmepumpkreise 134 vorgesehen sind. Die ersten Wärmetauscher 130 der beiden Wärmepumpkreise 134 sowie die zweiten Wärmetauscher 131 der beiden Wärmepumpkreise 134 sind jeweils zueinander in Reihe geschaltet. Insbesondere sind die ersten Wärmetauscher 130 der beiden Wärmepumpkreise 134 primärseitig und die zweiten Wärmetauscher 131 der beiden Wärmepumpkreise 134 sekundärseitig in Reihe geschaltet. Hierdurch kann die Effizienz gesteigert werden. Zum Kühlen kann auch bei dieser Ausführungsform ein in Figur 2 nicht gezeigter Wärmetauscher vorgesehen sein. Alternativ können einer oder beide Wärmepumpkreise 134 umschaltbar ausgestaltet sein, indem beispielsweise ein Vierwegeventil (nicht gezeigt) verwendet wird.

Die Erfindung ist nicht auf die dargestellten Ausführungsformen beschränkt. Insbesondere können weitere Komponenten, wie beispielsweise Vierwegeventile in dem oder den Wärmepumpkreisen 134, Einspritzventile oder dergleichen vorgesehen sein.

### Bezugszeichenliste

- 1: Temperiergerät
- 10: Gehäuse
- 11: Anschluss Arbeitskreis
- 12: Anschluss Quellkreis
- 13: Wärmepumpe
- 130: erster Wärmetauscher
- 131: zweiter Wärmetauscher
- 132: Wärmetauscher
- 133: Verdichter
- 134: Wärmepumpenkreis
- 14: Arbeitskreis
- 140: Pumpe
- 15: Quellkreis
- 150: Wärmetauscher

- 2: Werkzeug

## Patentansprüche

1. Temperiergerät zur Einstellung der Temperatur eines Arbeitsmediums, das flüssig oder gasförmig ist, in einem Arbeitskreislauf geführt wird und das in dem Arbeitskreis zu dem Wirkungsort geführt wird, um dort ein Werkstück zu erwärmen oder zu kühlen, umfassend mindestens eine Wärmepumpe (13), **dadurch gekennzeichnet, dass**
mindestens zwei Wärmetauscher (130, 131, 132, 150) in mindestens einem Wärmepumpenkreis (134, 14, 15) in Reihe geschaltet sind, wobei in dem Wärmepumpenkreis (134) drei Wärmetauscher (130, 131, 132) vorgesehen sind, wobei der erste Wärmetauscher (130) zur Übertragung von Wärme zwischen einem ein Arbeitsmedium aufweisenden Arbeitskreis (14) und dem Wärmepumpenkreis (134) dient, der zweite Wärmetauscher (131) zur Übertragung von Wärme zwischen einem Quellkreis (15) und dem Wärmepumpenkreis (134) dient, und der dritte Wärmetauscher (132) zur Übertragung von Wärme zwischen unterschiedlichen Zweigen des Wärmepumpenkreises (134) dient, wobei der Wärmestromkreis (134) derart ausgebildet ist, dass im ersten Zweig ein Wärmekreismedium vom ersten Wärmetauscher (130) zum zweiten Wärmetauscher (131) strömt und im zweiten Zweig das Wärmekreismedium vom zweiten Wärmetauscher (131) zurück zum ersten Wärmetauscher (130) strömt.

2. Temperiergerät nach Anspruch 1, **dadurch gekennzeichnet, dass** das Temperiergerät (1) zumindest einen Anschluss (11) für den Arbeitskreis (14) und zumindest einen Anschluss (12) für den Quellkreis (15) aufweist.

3. Temperiergerät nach Anspruch 2, **dadurch gekennzeichnet, dass** der mindestens eine Anschluss (12) für den Quellkreis (15) einen Anschluss an ein bauseitiges Netz, ein Reservoir oder einen Anschluss an die Umgebung darstellt.

4. Temperiergerät nach einem der Ansprüche 1 bis 3, **dadurch gekennzeichnet, dass** mindestens eine der Wärmepumpen (13) zum Kühlen des Arbeitsmediums ausgelegt ist.

5. Temperiergerät nach einem der Ansprüche 1 bis 4, **dadurch gekennzeichnet, dass** dieses einen Wärmespeicher und/oder einen Kältespeicher aufweist.

6. Temperiergerät nach einem der Ansprüche 1 bis 5, **dadurch gekennzeichnet, dass** der mindestens eine Anschluss (11) für den Arbeitskreis (14) einen Anschluss an einen Werkzeugkühlkreis, insbesondere einen Kunststoffverarbeitungswerkzeugkühlkreis darstellt.

7. Temperiergerät nach einem der Ansprüche 1 bis 6, **dadurch gekennzeichnet, dass** das Medium des Quellkreises (15) ein flüssiges oder gasförmiges Medium darstellt.

8. Temperiergerät nach einem der Ansprüche 1 bis 7, **dadurch gekennzeichnet, dass** in dem Temperiergerät (1) in dem Quellkreis (15) ein Lüfter vorgesehen ist, der mit der Umgebung verbunden ist.

9. Temperiergerät nach einem der Ansprüche 1 bis 8, **dadurch gekennzeichnet, dass** das Temperiergerät (1) ein mobiles Gerät darstellt.

## Claims

1. Temperature-control device for adjusting the temperature of a working medium, which is liquid or gaseous, is conducted in a working circuit and is conducted in the working circuit to the site of action in order to heat or cool a workpiece there, comprising at least one heat pump (13), **characterised in that**
at least two heat exchangers (130, 131, 132, 150) are connected in series in at least one heat pump circuit (134, 14, 15), three heat exchangers (130, 131, 132) being provided in the heat pump circuit (134), the first heat exchanger (130) serving to transfer heat between a working circuit (14) having a working medium and the heat pump circuit (134), the second heat exchanger (131) serving to transfer heat between a source circuit (15) and the heat pump circuit (134) and the third heat exchanger (132) serving to transfer heat between different branches of the heat pump circuit (134), wherein the heat flow circuit (134) is configured such that in the first branch a heat circuit medium flows from the first heat exchanger (130) to the second heat exchanger (131) and in the second branch the heat circuit medium flows from the second heat exchanger (131) back to the first heat exchanger (130).

2. Temperature-control device according to claim 1, **characterised in that** the temperature-control device (1) has at least one connection (11) for the working circuit (14) and at least one connection (12) for the source circuit (15).

3. Temperature-control device according to claim 2, **characterised in that** the at least one connection (12) for the source circuit (15) is a connection to an on-site network, a reservoir or a connection to the environment.

4. Temperature-control device according to any one of claims 1 to 3, **characterised in that** at least one of the heat pumps (13) is designed for cooling the working medium.

5. Temperature-control device according to any one of claims 1 to 4, **characterised in that** it has a heat accumulator and/or a cold accumulator.

6. Temperature-control device according to any one of claims 1 to 5, **characterised in that** the at least one connection (11) for the working circuit (14) is a connection to a tool cooling circuit, in particular a plastics processing tool cooling circuit.

7. Temperature-control device according to any one of claims 1 to 6, **characterised in that** the medium of the source circuit (15) is a liquid or gaseous medium.

8. Temperature-control device according to any one of claims 1 to 7, **characterised in that** a fan is provided in the temperature-control device (1) in the source circuit (15), which fan is connected to the environment.

9. Temperature-control device according to any one of claims 1 to 8, **characterised in that** the temperature-control device (1) is a mobile device.

## Revendications

1. Appareil de mise en température pour le réglage de la température d'un fluide de travail qui est liquide ou gazeux, est guidé dans un circuit de travail et qui est guidé dans le circuit de travail au lieu d'action afin d'y réchauffer ou d'y refroidir une pièce à usiner, comprenant au moins une pompe à chaleur (13), **caractérisé en ce que**
au moins deux échangeurs de chaleur (130, 131, 132, 150) sont montés en série dans au moins un circuit de pompe à chaleur (134, 14, 15), dans lequel trois échangeurs de chaleur (130, 131, 132) sont prévus dans le circuit de pompe à chaleur (134), dans lequel le premier échangeur de chaleur (130) sert à la transmission de chaleur entre un circuit de travail (14) présentant un fluide de travail et le circuit de pompe à chaleur (134), le deuxième échangeur de chaleur (131) sert à la transmission de chaleur entre un circuit source (15) et le circuit de pompe à chaleur (134), et le troisième échangeur de chaleur (132) sert à la transmission de chaleur entre différentes branches du circuit de pompe à chaleur (134), dans lequel le circuit de courant de chaleur (134) est réalisé de telle manière que dans la première branche un fluide de circuit de chaleur s'écoule du premier échangeur de chaleur (130) au second échangeur de chaleur (131) et dans la seconde branche le fluide de circuit de chaleur s'écoule du deuxième échangeur de chaleur (131) de nouveau au premier échangeur de chaleur (130).

2. Appareil de mise en température selon la revendication 1, **caractérisé en ce que** l'appareil de mise en température (1) présente au moins un raccord (11) pour le circuit de travail (14) et au moins un raccord (12) pour le circuit source (15).

3. Appareil de mise en température selon la revendication 2, **caractérisé en ce que** l'au moins un raccord (12) pour le circuit source (15) représente un raccord à un réseau côté bâtiment, un réservoir ou un raccord à l'environnement.

4. Appareil de mise en température selon l'une quelconque des revendications 1 à 3, **caractérisé en ce qu'**au moins une des pompes à chaleur (13) est conçue pour le refroidissement du fluide de travail.

5. Appareil de mise en température selon l'une quelconque des revendications 1 à 4, **caractérisé en ce que** celui-ci présente un accumulateur de chaleur et/ou un accumulateur de froid.

6. Appareil de mise en température selon l'une quelconque des revendications 1 à 5, **caractérisé en ce que** l'au moins un raccord (11) pour le circuit de travail (14) représente un raccord à un circuit de refroidissement d'outil, en particulier un circuit de refroidissement d'outil de traitement de matière plastique.

7. Appareil de mise en température selon l'une quelconque des revendications 1 à 6, **caractérisé en ce que** le fluide du circuit source (15) représente un fluide liquide ou gazeux.

8. Appareil de mise en température selon l'une quelconque des revendications 1 à 7, **caractérisé en ce que** dans l'appareil de mise en température (1) un ventilateur est prévu dans le circuit source (15), lequel est relié à l'environnement.

9. Appareil de mise en température selon l'une quelconque des revendications 1 à 8, **caractérisé en ce que** l'appareil de mise en température (1) représente un appareil mobile.
